(19) Europäisches Patentamt
European Patent Office
Office européen des brevets

(11) EP 4 368 582 A1

(12) **EUROPEAN PATENT APPLICATION**

(43) Date of publication:
**15.05.2024 Bulletin 2024/20**

(21) Application number: **22383090.2**

(22) Date of filing: **11.11.2022**

(51) International Patent Classification (IPC):
***C02F 1/28*** *(2023.01)* *C02F 101/20* *(2006.01)*
*C02F 101/22* *(2006.01)* *C02F 101/34* *(2006.01)*
*C02F 101/36* *(2006.01)* *C02F 101/38* *(2006.01)*
*C02F 101/30* *(2006.01)*

(52) Cooperative Patent Classification (CPC):
**C02F 1/286;** C02F 2101/20; C02F 2101/206; C02F 2101/22; C02F 2101/306; C02F 2101/34; C02F 2101/36; C02F 2101/38

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **Consejo Superior De Investigaciones Científicas 28006 Madrid (ES)**
- **Universidad del País Vasco - Euskal Herriko Unibertsitatea 48160 Leioa (Bizkaia) (ES)**

(72) Inventors:
- **Cerveny, Silvina 20018 Donostia-San Sebastian (ES)**
- **Schwartz Pomeraniec, Gustavo Ariel 20018 Donostia-San Sebastian (ES)**
- **Martinez Sabando, Javier 20018 Donostia-San Sebastian (ES)**
- **Coin, Francesco 20018 Donostia-San Sebastian (ES)**

(74) Representative: **Pons**
**Glorieta Rubén Darío 4**
**28010 Madrid (ES)**

(54) **COMPOSITION FOR REMOVING PHARMACEUTICALS AND HEAVY METALS FROM POLLUTED WATER**

(57) The present invention refers to a new material or composition for removing pharmaceuticals and heavy metals from contaminated water based on adsorption in a pectin film of a low degree of esterification without any filler. Pectin is crosslinked with europium or with a combination of europium and calcium. Additionally, the present invention refers to the process of preparing the composition and to the use thereof.

EP 4 368 582 A1

## Description

This invention describes a new material or composition for removing chemicals, pharmaceuticals, and heavy metals from polluted water. Said composition is based on a low degree of esterification pectin film cross-linked with europium. Therefore, the invention belongs to the field of wastewater treatment in environmental protection.

## BACKGROUND ART

Water pollution is the release of substances into water bodies (oceans, seas, lakes, rivers, streams, canals, etc.) that make water unsafe for aquatic ecosystems or human use. Nowadays, contamination is observed in almost all sources of available water bodies. A fundamental environmental challenge posed by water contamination is the presence of emerging contaminants (such as medicines, pharmaceutical products, industrial chemicals, heavy metals, metalloids, and pesticides), which drastically reduce drinking water quality. These emerging contaminants are gaining notable prominence in water remediation research because they possess an intricate molecular nature, are not routinely monitored, and are very hard to detect and remove.

Contaminated water can be remediated or cleaned to some extent for its reuse. The different contaminants can be removed using both traditional and modern methods. Among conventional methods, we can mention filtration (water passes through a column of bed and bank materials), phase separation (such as sedimentation), biological and chemical processes (such as oxidation), leaching, photocatalysis, and hydrolysis. These methods are typically used in wastewater treatment plants (WWTPs), and they play a crucial role in environmental preservation and are essential for modern urban life. However, the design of WWTPs is based on the need to reduce organic and suspended solids, but they are not planned to remove emerging contaminants. Remediation efficiencies in WWTPs can be less than 10% in the case of pharmaceuticals or heavy metals. Its removal has rarely been considered an objective, but this must now be of primary concern when water is used, for instance, for agriculture.

Water and environmental contamination from pharmaceutical products can occur throughout their life cycle (from manufacturing to disposal). Pharmaceuticals are found at concentrations ranging from ng/L to μg/L, and the highest concentration is found in rivers and lakes that receive treated water from wastewater treatment plants (McGrane, S. J. Hydrological Sciences Journal 2016, 61 (13), 2295-2311; Campanha, M. B. Environmental Science and Pollution Research 2015, 22 (10), 7936-7947). This wastewater also includes antibiotic-resistant bacteria (this resistance appears because of antibiotics in water), which can cause as many deaths as cancer. In addition to pharmaceuticals, other emerging contaminants can harm aquatic life and human health. They were previously unknown to be significant in freshwater (Farré, M. Journal of Chromatography A 2012, 1259, 86-99), and most are not yet included in routine monitoring programs.

Adsorption is one of the most convenient wastewater purification techniques for removing pollutants from contaminated aqueous media because of its relatively straightforward design, cost-effectiveness, operation, and energy efficiency. Adsorption occurs when a molecule in a liquid binds itself to the surface of a solid substance. The most frequently used sorbents are active carbon, natural or synthetic zeolites, and silica gel. Compared with these traditional adsorption methods, bio-sorption is considered a very suitable method in which the role of the adsorbent is critical. Commonly used bio-sorbents include chitosan, pectin, alginate, etc., which are widely available, easy to obtain, and eco-friendly.

The entry of nanotechnology into wastewater treatment engineering implied a noteworthy advancement, and it is a promising alternative to traditional water treatment methods. The main advantages of using nano-filters (as opposed to conventional systems) are that nano-particles have high efficiency, have a large surface area, and remove pollutants more efficiently than traditional methods. There are several types of membranes for water treatment (based on reverse osmosis, nano-, ultra, micro-filtration, and particle filtration). The performance of a membrane is principally ruled by the structure of its pores and the chemical/physical properties of the material.

The most commonly used commercial materials are organic synthetic polymers or inorganic materials such as zeolites or activated carbon. However, inorganic materials are expensive, with high operational costs, and water permeability is often lower than that of polymeric ones. On the other hand, the main problem of polymeric membranes is that they are hydrophobic with a high fouling tendency (fouling is caused by microorganisms or proteins deposited on the surface of the membrane).

These nano-filters are functionalized with nanoparticles to overcome the hydrophobicity problem in the nano-filtration organic membranes. In fact, several types of materials containing nanoparticles (NPs) have been studied for possible remediation applications, as they possess a high level of adsorption. However, nanoparticles pose challenges related to eco-toxicity since they might be released into the environment, where they can accumulate for years. Therefore, the use of NPs is non-viable.

Regarding the mentioned inconveniences of the prior art, the present invention provides an adsorbent based on low esterification degree pectin and without the use of nanoparticles, making it more suitable for removing pharmaceuticals and heavy metal polluted water bodies.

Pectin is a hetero-polymer present in plant cell walls. Pectin is particularly predominant in fruit peels, especially in citrus fruits and apple pomace. Its backbone chain is composed of D-galacturonic acid residues linked by $\alpha$ 1-4 glycosidic bond (homogalacuronan domain), the main and most abundant domain (Gawkowska, Cybulska, & Zdunek, Pol., 2018,10 (7)) (around 60%). Additionally, as shown in Fig. 1, which belongs to the state of the art, it has different domains branched, such as rhamnogalacturonan I (RGI) and sugars (Zdunek, Pieczywek, & Cybulska, Comp. Rev. Food Scien. Food Saf., 2021, 20 (1),1101-1117).

The carbon 6 of the D-galacturonic residues can be methyl-esterified ($COOCH_3$) or carboxylated ($COO^-$, in its deprotonated form), as indicated in Fig. 2 belonging to the state of the art. Depending on the ratio of methyl-esterification of these residues, pectin shows a different degree of esterification (DE). Carboxyl groups are hydrophilic and can coordinate with metal ions, whereas methyl-esterified are phobic. Therefore, maximizing the number of $COO^-$ (i.e., low degree of esterification), the adsorption of metal ions is very high compared with pectin with a high level of $COOCH_3$ groups.

DE is related to the gelling mechanism of the pectin and classifies pectin into two groups: high methoxyl pectins (HM), where more than 50% of the galacturonic acid residues are esterified and low methoxyl (LM) pectins, where less than 50% of the galacturonic acid residues are methoxylated. Independent of the DE, pectin is a watersoluble biopolymer. Therefore, to be used in aqueous environments, it should become insoluble. This is achieved by crosslinking the pectin with various crosslinking agents.

Different crosslink agents were used for pectin of low DE, being positive divalent ($Ca^{+2}$, $Cu^{+2}$, $Sr^{+2}$ $Ni^{+2}$ $Zn^{+2}$ $Cd^{+2}$ $Pb^{+2}$ or $Mg^{2+}$) or trivalent ($Al^{3+}$, $La^{3+}$, and $Fe^{3+}$) ions the most used (Munarin, F. International Journal of Biological Macromolecules 2012, 51 (4), 681-689; McKenna, B. A. Carbohydrate Research 2010, 345 (9), 1174-1179). The crosslinking or gelation of pectin with low DE involves ionic linkages via calcium bridges between carboxyl groups (Cao, L., et al. (2020). Carbohydrate Polymers, 242(April), 116389).

Divalent cations such as $Ca^{2+}$ or trivalent cations such as $Al^{3+}$ can bind between two carboxyl groups of adjacent galacturonic acid chains. Gelation of low methoxylated pectin with calcium ions occurs by forming junction zones according to the so-called "egg-box" model (Grant, G. T. FEBS Letters 1973, 32 (1), 195-198), which has been initially described for alginates (see Fig. 3 belonging to the state of the art). The lower the pectin esterification degree, the more divalent cation binding sites will be in the molecule, therefore, the ability to absorb more quantities of divalent cations.

Regarding previous uses of pectin, as it is a natural component of vegetables and fruits, it is an exceptionally safe multifunctional food additive (E440). Therefore, the practical uses of pectin are in the food and pharmaceutical industries (Thakur, B. R. et al. (1997). Critical Reviews in Food Science and Nutrition, 37(1), 47-73). In addition, pectin is popular in several scientific fields because of its availability, safety, relatively low price, and functionality. Specific structural characteristics developed by pectin's functional groups or attachment of chemicals on the molecule make it a good candidate for several purposes, such as food innovations, nutritional remediation, drug delivery, illness treatment, tissue engineering, and other approaches. Notably, pectin is resistant to gastrointestinal hydrolyzing enzymes and acidic/alkaline media, favouring its application in colon delivery via an oral route under a specific condition.

In particular, pectin, with a low level of esterification, also has a high application value and broad application prospects as a functional food ingredient (Moslemi, M. Carbohydrate Polymers 2021, 254, 117324). It also has been studied as a forthcoming biomaterial for tissue engineering and biomedical applications (Reichembach, L. H. et al. Food Hydrocolloids 2021, 118, 106824). Pectin films have also been used in packaging, although their limitations because of their inadequate mechanical properties and high hydrophilicity of the pectin films (Oliva-Moreno, E. et al. Materials Letters 2021, 290, 129488; Espitia, P. J. P. et al. Food Hydrocolloids 2014, 35, 287-296). This issue can be resolved by blending with other polymers (Huang, S. et al. Food Chemistry 2021, 361, 129832) or incorporating crosslinkers and/or filler material (Makaremi, M. et al. ACS Applied Materials & Interfaces 2017, 9 (20), 17476-17488).

Another application is the use of water purification for the removal of toxic pollutants such as metal ions and dyes (Thakur, S. et al. Journal of Environmental Management 2019, 238, 210-223; Wang, R. et al. Trends Food Sci. Technol. 2019, 91, 319-329) and sea-water desalination (Rampun, E. L. A. et al. Membrane Technology 2019, 2019 (12), 5-9).

The present invention proposes a new composition based on low esterification degree pectin useful for removing both pharmaceuticals and heavy metal polluted water bodies. This property contrasts with pectin cross-linked with calcium, which can only remediate heavy metals.

## SUMMARY OF THE INVENTION

Increasing demand for clean water due to population growth, urbanization, intensive farming and mining, abuse and misuse, and climate change have become vital global issues. Today, purifying water is expensive and energy-consuming. Moreover, conventional drinking water treatment is inefficient in removing many emerging contaminants such as pharmaceuticals, heavy metals, and other small chemicals.

Therefore, new technical solutions are required to meet different treatment challenges.

The inventors of the present invention have found a new material or composition and a process for removing chemicals, pharmaceuticals, and heavy metals from contaminated water based on adsorption in a pectin film of a low degree of esterification cross-linked with europium (Eu(III)) or with a combination of europium and calcium (Ca(II)). Pectin is a biodegradable polymer that can be rendered insoluble by cross-linking with said cross-linking agents.

Then, the first aspect of the invention relates to a composition (composition of the invention) comprising pectin of a low degree of esterification cross-linked with a cross linking agent comprising Europium (III), wherein the composition is in the form of a film.

In a preferred embodiment, the cross-linking agent also comprises Calcium (II).

In a preferred embodiment, the cross-linking agent consists of Eu (III) or a combination of Eu(III) and Ca(II).

As indicated in the state of the art, pectin with a low degree of esterification is a pectin wherein less than 50% of the galacturonic acid residues are methoxylated. Pectin, with a low degree of esterification is a commercially available product.

In a preferred embodiment, less than 20 % of the galacturonic acid residues are methoxylated. In a more preferred embodiment, only 9.9 % of the galacturonic acid residues are methoxylated.

The term "film" in the present invention refers to a thin solid layer of material, preferably between 0.01 and 1 cm thickness, typically in a planar structure. In a more preferred embodiment, the film has a thickness between 0.01 and 0,5 cm and, even more preferably, between 0.01 and 0.25 mm.

In a preferred embodiment, the composition comprises between 10 and 55 mg of Eu (III) in 1 gr of the composition (film) if Eu(III) is the only cross-linking agent.

In a preferred embodiment, the composition comprises between 10 and 110 mg of Eu (III) in 1 gr of the composition (film) if only both Eu(III) and Ca(II) are cross-linking agents.

In a preferred embodiment, the composition comprises between 5 and 20 mg of Ca (II) in 1 gr of the composition (film).

As previously indicated, the composition or material of the present invention is in the form of a film, so it is not in the form of nanoparticles and does not contain nanoparticles. This fact implies advantages concerning adsorbents known on the state of the art based on the use of nanoparticles, as these pose challenges related to eco-toxicity since they might be released into the environment where they can accumulate for years.

Different from some adsorbent compositions of state of the art, the composition of the present does not contain any filler. Some of the fillers used in the prior art are: carbonaceous materials (activated carbon bio-char or carbon nanotubes), metal, and metal oxide engineered nanomaterials (nanoscale zero-valent iron (nZVI), $TiO_2$, Ag, and ZnO), or magnetic-core nanoparticles (iron, nickel, cobalt or their oxides). The main reason to use these nanoparticles or fillers in some absorbents of state of the art is because of their capability to enhance the adsorption capacity and, in some cases, antifungal and antibacterial activities. Advantageously, the composition of the invention does not comprise any filler.

"Nanoparticles" or "nanomaterials" refers to particles whose largest dimension is less than 100 nm.

In a preferred embodiment, the composition of the invention consists essentially of a pectin of low degree of esterification and the cross-linking agent.

By the term "consist essentially of", we mean that the compositions of the invention contain substantially no other components, but some water molecules derived from the preparation method may be present. This is because the material is hydrophilic, and even after drying, some water molecules (less than 0.05 wt. % of water with respect to the composition) remain in the structure, depending on the relative humidity.

In the present invention, Eu(III) and $Eu^{3+}$ are used interchangeably to refer to the trivalent Europium cation. Similarly, both Ca(II) and $Ca^{2+}$ refer to the divalent Calcium cation.

Another aspect of the invention refers to the process to prepare a composition, as described in the first aspect of the invention. The process comprises the next steps:

a) obtaining a pectin film by a casting method comprising:

- preparing a water solution of pectin of low degree of esterification and
- pouring the solution of a pectin of low degree of esterification in a container and drying, preferably on air, to form a film;

b) obtaining a cross-linked pectin film by a method comprising:

- immersing the dried film prepared in step a) in a Eu(III) aqueous solution to obtain a film of pectin cross-linked with Eu(III),
- washing the film of pectin cross-linked with Eu(III) with deionized water to clean any Eu(III) excess that may

remain from the cross-linking process and drying said film, preferably at room temperature (20 - 25 ºC), thus obtaining the composition of the present invention in the form of a film of solid consistency.

In a preferred embodiment, the preparation of the water solution of pectin is carried out in presence of glycerol for better manipulation of the film to be obtained. In a more preferred embodiment, the amount of glycerol in the solution is between 5 and 15 w/v %, more preferably, 6 w/v % ("w/v %" refers to number of grams of the compound in 100 ml of solution).

In a preferred embodiment, the preparation of the water solution of pectin is carried out at a temperature between 40 and 90 ºC under stirring until complete dissolution, more preferably, at a temperature between 60 and 70 ºC and even more preferably, at 70 ºC.

In a preferred embodiment, the amount of pectin in the solution is between 1 to 8 w/v % more preferably, 3% w/v.

In a preferred embodiment, the water solution of pectin of low degree of esterification is subjected to ultra-sonication in ultra-sonication bath before pouring it into a container. The ultra-sonication step allows to both homogenize and maximize the bubble elimination from the viscous solution. The ultra-sonication is preferably carried out at a temperature between 40 and 95 ºC, more preferably at 70 ºC, and /or for at least 1 h, more preferably between 1 and 2 h, and, even more preferably, for 1.5 h.

In a preferred embodiment, between 0.05 and 0.2 ml of the solution in step a) is poured per 1 $cm^2$ of the container.

In a preferred embodiment, the solution poured in a container is dried on air for 12 hours.

In a preferred embodiment, the film prepared in step a) is immersed in a Eu(III) aqueous solution wherein the concentration of Eu(III) is between 100 and 1000 ppm, more preferably, 500 ppm.

In a preferred embodiment, the film is immersed in the Eu(III) aqueous solution for at least 10 min, more preferably between 10 min to 5 hours, and even more preferably for 40 min. The longer the time, the higher the degree of crosslinking obtained.

In a preferred embodiment the process comprises a step b') of obtention of a pectin film cross-linked with Ca(II), between steps a) and b). This step b') is similar to step b), but uses Ca(II) instead of Eu(III). That is, step b') comprises: obtaining a cross-linked pectin film by a method comprising:

- immersion of the dried film prepared in the previous step a) in a Ca(II) aqueous solution to obtain a film of pectin cross-linked with Ca(II),
- washing the film of pectin cross-linked with Ca(II) obtained in the previous step with deionized water and drying said film, preferably at room temperature (20-25ºC).

In a preferred embodiment, the concentration of Ca(II) aqueous solution in step b') is between 100 and 1000 ppm, more preferably, 500 ppm.

In a preferred embodiment, the film is immersed in the Ca(II) aqueous solution in step b') for at least 10 min, more preferably between 10 min to 5 hours, and even more preferably for 40 min.

The present invention also refers to the film of pectin of low degree of esterification cross-linked with Eu(III) or with Ca(II) and Eu(III) obtained by the process previously described.

A last aspect of the present invention refers to the use of the composition described in the first aspect of the invention to remove chemicals, pharmaceuticals, and/or heavy metals from water. Chemicals, pharmaceuticals, and heavy metals contribute to water pollution. The composition of the invention is of great utility for the removal of these components from polluted water.

The term "chemicals", as used herein, includes solvents, pesticides, fertilizers, industrial and household chemicals and the like.

As used herein, the term "pharmaceuticals" are defined as any chemical used for the diagnosis, treatment (cure/mitigation), alteration, or prevention of disease, health condition, or structure/function of the body.

As used herein, the term "heavy metal" denotes a metal having an atomic weight greater than that of sodium. It includes, but is not limited to, magnesium, aluminium, calcium, scandium, titanium, vanadium, chromium, manganese, iron, cobalt, nickel, copper, zinc, gallium, germanium, arsenic, selenium, strontium, yttrium, zirconium, niobium, molybdenum, technetium, ruthenium, rhodium, palladium silver, cadmium, indium, antimony, tin, barium, lanthanum, hafnium, tantalum, tungsten, rhenium, osmium, iridium, platinum, gold, mercury, tellurium, lead, bismuth, and polonium. In particular, it includes divalent and trivalent ions of these metals, particularly those of copper, zinc, cadmium, nickel, barium, lead, aluminium, and selenium.

In a preferred embodiment, the present invention refers to the use of the composition described in the first aspect of the invention to remove pharmaceuticals and/or heavy metals from water.

In a preferred embodiment, the present invention refers to the use of the composition described in the first aspect of the invention comprising or consisting of pectin of low degree of esterification cross-linked with a cross-linking agent comprising or consisting of Eu (III) to remove pharmaceuticals from polluted water.

In a preferred embodiment, the present invention refers to the use of the composition described in the first aspect of the invention comprising or consisting of pectin of low degree of esterification cross-linked with a cross-linking agent comprising or consisting of a combination of Eu(III) and Ca(II) to remove pharmaceuticals and/or heavy metals from polluted water.

In a preferred embodiment, the pharmaceuticals are antibiotics and/or antihistamines, more preferably, the pharmaceuticals are selected from Trimethoprim (TMP), Tetracycline (TC), and Chlorpheniramine maleate (CPH).

In a preferred embodiment, the heavy metal is a divalent or trivalent heavy metal.

In another preferred embodiment, the heavy metal is selected form: Copper, Zinc, Cadmium, Nickel, Barium, Lead, Aluminium, and Selenium.

Pharmaceuticals and heavy metals can be removed from water with high efficiency if the pectin is cross-linked with both europium and calcium. This material can be reused up to 6 times without almost losing effectiveness. Finally, the material is completely biodegradable and without the use of nanoparticles.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims, the word "comprise" and its variations are not intended to exclude other technical features, additives, components, or steps. Additional objects, advantages, and features of the invention will become apparent to those skilled in the art upon examination of the description or may be learned by practice of the invention. The following examples and drawings are provided by way of illustration and are not intended to be limiting to the present invention.

## DESCRIPTION OF THE DRAWINGS

**Fig. 1.** Schematic representation of pectin molecule. In the legend, the monomeric carbohydrates that form the molecule are mentioned.

**Fig. 2.** Homogalacturonan chain composed by galacturonic acid residues (pectin backbone) (Zegada Franco, V. Y., Investigación & Desarrollo 2015, 1, 65-76). The carbon 6 of these residues can be methyl-esterified ($COOCH_3$) or carboxylated ($COO^-$).

**Fig. 3.** Schematic representation of calcium bound to galacturonic acid polymers a) "egg-box" model dimer; b) aggregation of dimers; c) "egg-box" model cavity calcium cation binding site to polymer (Grant, G. T. et al. FEBS Letters 1973, 32 (1), 195-198).

**Fig. 4.** Example of UV-VIS for tetracycline, Chlorpheniramine maleate and Trimethoprim.

**Fig. 5.** Example calibration curve of TMP for a solution at pH = 7 and using the peak at 278 nm.

**Fig. 6.** Adsorption kinetics of pectin in solutions with an initial $Eu^{+3}$ or $Ca^{2+}$ concentration of 500 ppm. (a) Kinetics corresponding to $Eu^{3+}$. (b) Kinetics corresponding to $Ca^{2+}$. (c) Dual crosslinking, first pectin was crosslinked with $Ca^{2+}$ and, thereafter with $Eu^{3+}$. The dashed lines in each figure represents the fitting using the Pseudo First Order model (PFO) for $Eu^{3+}$ and the Pseudo Second Order model (PSO) for both $Ca^{2+}$ and dual crosslinking (Both models are described in: J. Wang, X. Guo, Journal of Hazardous Materials 390 (2020) 122156).

**Fig. 7.** Adsorption kinetics of pectin cross-linked with $Eu^{3+}$. Initial tetracycline concentration was 50 mg/L and pH 7 fixed using a $HNO_3$ solution. Dashed line represents the fitting using the PSO model.

**Fig. 8.** Adsorption isotherms of tetracycline modeled with the Langmuir model (see Table S2 where the parameters are shown). The initial tetracycline concentration ranged from 1 to 60 mg/L. The dosage of adsorbent was 2.5 g/L and the initial pH = 7.

**Fig. 9.** Adsorption kinetics of pectin. (a) Initial Nickel concentration was 446 ppb (μg/L) and pH = 7 fixed using a NaOH solution. (b) Initial Zinc concentration was 500 ppm (mg/L) and pH = 7 fixed using a NaOH solution. Dashed line represents the fitting using the PSO model.

**Fig 10.** Adsorption kinetics (a) and removal rate (b) of pectin film cross-linked with the dual system (black points) and cross-linked only with $Ca^{2+}$. Initial tetracycline concentration was 50 ppm, pH = 7 was fixed using a $HNO_3$ solution and the dose was 2.5 g/L.

**Fig 11.** Adsorption kinetics (a) and removal rate (b) of pectin film cross-linked with the dual system (red points) and cross-linked only with $Eu^{3+}$. Initial Zinc concentration was 150 ppm, pH = 7 was fixed using a NaOH solution and the dose was 2.5 g/L.

**Fig 12.** Adsorption kinetics (a) and removal rate (b) of pectin film cross-linked with the dual system (black points). Initial concentration was 30 ppm for tetracycline and for Zinc respectively. pH = 7 was fixed using a NaOH and $HNO_3$ solutions. The dose was 2.5 g/L.

## Examples

Next, illustrative examples of preparation of compositions according to the present invention and their use are provided.

### 1. Materials and methods

**1.1 Materials:** The pectin used is extracted from citrus peels with a DE of 9.9% (Herbstreith & Fox). In addition, it has been used glycerol (≥ 99%, Merck), calcium chloride anhydrous granular (≥ 93%, Merck), europium chloride hexahydrate (212881, Merck) and deionized MiliQ water.

### 1.2 Antibiotics and Antihistamine

Two antibiotics (Trimethoprim (TMP) and Tetracycline (TC)) have been used. Trimethoprim (TMP) is an antibiotic used mainly in the treatment of bladder infections whereas Tetracycline (TC) is an antibiotic that fights infections caused by many different bacterial infections of the skin, intestines, respiratory tract, urinary tract, genitals, lymph nodes, and other body systems. TC is also used in livestock farming. In addition, Chlorpheniramine maleate (CPH) has been used. It is an antihistamine that relieves allergy symptoms, hay fever, and the common cold.

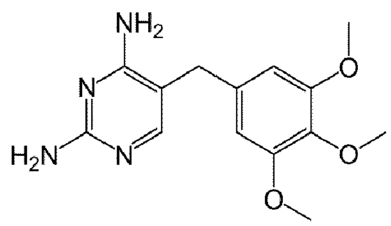

Antibiotic TMP- Trimethoprim

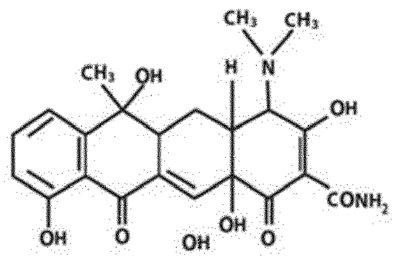

Antibiotic TC- Tetracycline

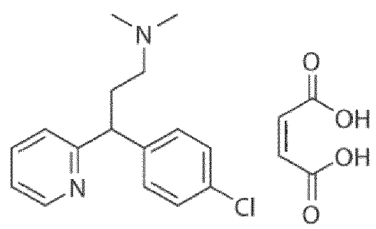

Antihistamine – Chlorpheniramine maleate (CPH)

### 1.3 Heavy metals

For zinc, dilutions, it has been used a 1000 mg/L Zn standard solution for ICP (18562, Sigma Aldrich), 1000 mg/L Ni standard solution for ICP (28944, Sigma Aldrich) and deionized water.

### 1.4 Pectin film by casting method

1. A 6% w/v glycerol and 3% w/v pectin water solution is prepared in an Erlenmeyer flask under vigorous magnetic stirring at 70 ºC until complete dissolution (about 1.5 hours).
2. The flask is then transferred to an ultra-sonication bath at 70 ºC for 1.5 hours to both homogenize and maximize the bubble elimination from the viscous solution.
3. 10 ml of the solution is poured onto a petri dish (10 cm diameter) and dried on air for 12 hours.

### 1.5 Pectin Film crosslinking

Pectin films were cross-linked using three different crosslinking agents:

- Europium (III) chloride hexahydrate.
- Calcium (II) chloride.
- A combination of Europium (III) and Calcium (II).

The procedure to crosslink the films is the following:

1. The film prepared in 1.4 is immersed in a 500 ppm $Eu^{3+}$ (or $Ca^{2+}$) aqueous solution for 40 min.
2. After cross-link, the films are washed four times with 200 ml of deionized water to clean any $Eu^{3+}$ (or $Ca^{2+}$) excess that may remain from the cross-linking process.
3. Films are dried at room temperature under vacuum and stored at 4º C for further analysis.

When pectin films were cross-linked using both $Eu^{3+}$ and $Ca^{2+}$, the procedure is to crosslink at first with calcium and thereafter with europium.

### 1.6 UV-Vis spectroscopy

The antibiotic concentration was determined using a UV-Vis spectrophotometer (Agilent 8453A). Fig. 4 shows the full scan spectrum of tetracycline, Chlorpheniramine maleate, and trimethoprim in the wavelength range of 190 to 800 nm determined by UV-Vis spectrophotometry. A calibration curve (Fig. 5) was generated before measuring the antibiotic concentration profile during the experiments, and a linear regression R-value of 0.999 was observed. Antibiotic concentration was determined with this calibration curve according to the Lambert-Beer law (A = $\varepsilon$ c l, where A is the absorbance (a.u.), $\varepsilon$ is the molar absorption coefficient ($M^{-1}$ $cm^{-1}$), c is the molar concentration (M) and l is the optical path length (cm).

Two major absorption peaks were observed for tetracycline at 272 and 359 nm wavelengths. The equilibrium concentration of tetracycline in the solution was measured at 272 nm whereas for trimethoprim at 278 nm, and Chlorpheniramine maleate at 261nm.

### 1.7 ICP-AES

To measure the concentration of heavy metals, we have used inductively coupled plasma Atomic Emission Spectrometer (ICP-AES) (Horiba Yobin Yvon Activa).

### 1.8 Adsorption experiments (isotherms and kinetic experiments)

All adsorption experiments were performed in 5 mL solutions using a dose of 2.5 g/L under orbital shaking at 125 rpm and at room temperature (25 $\pm$ 1 °C). The pH of solutions was kept constant to pH = 7 using a 0.1 M NaOH solution and 0.1M $HNO_3$ solutions.

**Adsorption isotherms** were measured at varying concentrations of a given pollutant, ranging from 5 mg/L to 60 mg/L (pharmaceutical), 25 mg/L to 1500 mg/L for heavy metals. Equilibrium pollutant concentration ($C_{eq}$) was measured using UV-Vis spectroscopy for pharmaceuticals whereas for metals ($Eu^{3+}$, $Ca^{2+}$, $Ba^{2+}$, or $Zn^{2+}$), we have used an inductively coupled plasma Atomic Emission Spectrometer (ICP-AES) (Horiba Yobin Yvon Activa).

The batch adsorption experiments at 24 h were used to measure the concentration at equilibrium ($C_{eq}$) and the adsorption capacity ($q_e$) (mg/g) was calculated as:

$$q_e = \frac{C_0 - C_{eq}}{d} \qquad (1)$$

where $C_0$ and $C_e$ represent the initial and equilibrium concentrations of a given pollutant (ppm), respectively, and d is the adsorbent dose.

The removal efficiency (R) was calculated as:

$$R\% = \left(\frac{(C_0 - C_e)}{C_0}\right) \times 100\% \quad (2)$$

Regarding the **adsorption isotherms,** they were fitted using the Langmuir and Freundlich models (Equations (3) and (4), respectively):

$$q(C_{eq}) = \frac{q_M C_{eq}}{C_{eq} + 1/K_L} \quad (3)$$

$$q(C_{eq}) = A C_{eq}^{1/n} \quad (4)$$

where q is the adsorption capacity, $C_{eq}$ is the equilibrium concentration, $q_M$ is the maximum adsorption capacity, and $K_L$, A, and n are constants of the models. Langmuir model best fits the experimental data, which indicates the presence of homogeneous active sites and monolayer adsorption on the surface of the films.

For **kinetic experiments,** we measured pharmaceutical or heavy metal concentration between 10 min and 24 h at the fixed concentration of 50 mg/L (50 ppm). Data were analysed using non-linear fittings of the pseudo second order (PSO) model

$$q(t) = \frac{t}{k^{-1} q_M^{-2} + t/q_M} \quad (5)$$

where $q_M$ (mg/g) is the adsorption capacity at equilibrium and k is the characteristic time-related constant that indicates the adsorption speed at the beginning of the adsorption process.

## 2. Results

### 2.1 Crosslinking

Kinetics experiments were performed to study the time when the crosslinking was produced in a $Eu^{3+}$ 500 ppm solution (see Fig. 6a). The sorption of $Eu^{3+}$ was rapid in the first 30 min. After that, it proceeded at a relatively slower rate and finally reached equilibrium after ~200 min. The same behavior is observed using calcium as a crosslinking agent (Fig. 6b). In addition, Fig. 6c shows the kinetic when the pectin is cross-linked with calcium and then with europium. In this last case, the crosslinking is even more effective than that produced only with $Eu^{+3}$.

Adsorption kinetics follows the pseudo-second order model (see eq. 5) with a linear correlation coefficient of 0.99. This suggests that chemisorption is the main adsorption mechanism (Wang, R.-S. et al. Polymers 2021, 13 (15), 2453).

In pure water with pH of 7, low methoxylated pectin has many negative centers, because pKa of pectin is about 3.5. The degree of esterification has a crucial importance for an electrostatic interaction between pectin and ions. The low DE causes a high available number of acidic groups, which can bind with more cations. Thus, the lower the degree of esterification of pectin, the higher number of junction zones. Therefore, the formed film is stable. Table 1 shows the PSO parameters of the fitting.

**Table 1.** Adsorption kinetics fit results using PSO model for the data in Fig. 6.

| Sample | $q_M$ [mg/g] | k | $R^2$ |
|---|---|---|---|
| Crosslinking with $Eu^{+3}$ PFO | 58.51 ± 4.08 | 0.024 ±0.007 | 0.8868 |
| Crosslinking with $Ca^{+2}$ PSO | 21.22 ± 0.66 | 0.006 ± 0.001 | 0.98652 |
| Crosslinking with $Eu^{+3}$ and $Ca^{+2}$ PSO | 114.52 ±2.52 | 0.0020 ± 0.0005 | 0.98522 |

From the results in Fig. 6, we can conclude that the removal efficiency after 40 min in a solution with an initial concentration of 500 ppm was 18, 14, and 54 % for $Eu^{3+}$, $Ca^{2+}$, and $Eu^{3+}$ when the film was previously cross-linked with $Ca^{2+}$, respectively. This means that the dual crosslinking system has more efficiency and more $Eu^{+3}$ ions are captured

by the film.

### 2.2 Antibiotics removal - film crosslinked with $Eu^{3+}$

The adsorption kinetics was investigated for three different pharmaceuticals (tetracycline (TC), trimethoprim (TMP) and chlorpheniramine maleate (CPH)).

The experiments for the effects of contact time were carried out at varying contact times ranging from 10 min to 1500 min at an adsorbent dose of 2.5 g/L, at room temperature (25 °C), and pH = 7. Optimization of contact time is essential for the adsorption studies to ensure complete equilibrium between the film and TC. Fig. 7 shows the effect of the contact time of the pectin film and TC. It was found that TC removal was fast during the first 100 min reaching the equilibrium after -500 min. This may be because, in the initial stage, adsorption sites are highly available, but over time, there is a depletion of the adsorption sites.

Fig. 7b shows the amounts of removal rate corresponding to the different equilibrium concentrations. The results showed that the percentage of tetracycline removed is maximum (68 %) at 10 ppm of TC. It is also expected to increase at lower concentrations of TC in water.

Fig. 8 show the adsorption isotherms with initial concentration in the range of 0 to 60 mg/L. The data were fitted with the Langmuir model (see Table 2 where the parameters are shown).

**Table 2.** Isotherm fit results using Langmuir models. The coefficient R2 was calculated on the linearized forms.

| Sample | $q_M$ [mg/g] | k | $R^2$ |
|---|---|---|---|
| **Crosslinking with $Eu^{+3}$** | 24.0 ± 3.4 | 0.013 ± 0.003 | 0.99 |

At an initial concentration of 10 ppm of antibiotics in water, the removal efficiency is shown in Table 3. We reached values higher than 50% for a dose of the adsorbent of 2.5 g/L. It is important to note that in real water, the concentration of antibiotics is much lower (about 1 ppb); therefore, the removal efficiency will reach very high values.

**Table 3.** Removal efficiency and adsorption capacity of pectin cross-linked with $Eu^{3+}$ for different pharmaceuticals. The dosage was 2.5 g/L and the pH was maintained at 7.

| Pharmaceutical | Removal Efficiency at 10 ppm [%] |
|---|---|
| Tetracycline (TC) | **68** |
| Trimethoprim (TMP) | **46** |
| Chlorpheniramine maleate (CPH) | **51** |

### 2.3 Metal removal (film crosslinked with $Ca^{2+}$)

Fig. 9 shows the adsorption isotherms, i.e., the amounts of adsorbed nickel (a) or zinc (b) versus time. Note that in Fig 9a, the nickel concentration is 446 ppb whereas for Zinc we have used a higher concentration of 500 ppm. In both cases, we can observe that in some minutes, the removal efficiency is very high. Table 4 shows the removal efficiencies for three different heavy metals at the initial concentration shown in the Table.

**Table 4.** Removal efficiency at the initial concentration showed in the table of pectin cross-linked with $Ca^{2+}$ for different heavy metals. The dosage was 2.5 g/L and the pH =7.

| Pharmaceutical | Removal Efficiency [%] | Initial concentration (ppm) |
|---|---|---|
| Nickel (Ni) | **99.8** | **1.6** |
| Zinc (Zn) | **100.0** | **1.9** |
| Barium (Ba) | **96.7** | **22.6** |

### 2.4 Removal of antibiotics and heavy metals (pectin films cross-linked with both $Eu^{+3}$ and $Ca^{2+}$),

This section presents the pectin film's results cross-linked with $Eu^{3+}$ and $Ca^{2+}$. We have already seen that when pectin is cross-linked with $Eu^{3+}$, it can adsorb pharmaceuticals, and if it is cross-linked with $Ca^{2+}$, it can adsorb

heavy metals. Therefore, we expect that films cross-linked with $Eu^{3+}$ and $Ca^{2+}$ can remove antibiotics and heavy metals at the same time. This is important because, typically, water is polluted with more than a single contaminant.

Fig. 10 shows the kinetic experiments (a) and the removal rate (b) for the adsorption of tetracycline on pectin films cross-linked with the dual system ($Eu^{3+}$ and $Ca^{2+}$). The adsorption capacity of TC is higher for the dual crosslinking system. The q value for the TC removal is 57% higher for the dual system (14 mg/g) than the $Eu^{3+}$ cross-linked film (8 mg/g).

Similar to Fig. 10, Fig. 11 shows the kinetic experiments (a) and the removal rate (b) for the adsorption of Zinc on pectin films cross-linked with the dual system ($Eu^{3+}$ and $Ca^{2+}$). As in the case of TC, the adsorption capacity of Zinc is clearly higher for the dual crosslinking system.

Finally, Fig. 12 shows the kinetic experiments (a) and the removal rate (b) for the adsorption of the two pollutants (tetracycline and Zinc) at the same time. The removal rate is very high in both cases as seen in Fig. 12b.

**Table 5.** Removal efficiency of pectin cross-linked with $Eu^{3+}$ and $Ca^{2+}$ for an initial concentration of 5 ppm of tetracycline and Zinc respectively. The dosage was 2.5 g/L and the pH = 7.

| | **Removal Efficiency** |
|---|---|
| Tetracycline (TC) | **87** |
| Zinc (Zn) | **96** |

In conclusion, we have shown a novel way to crosslink pectin with low degree of methoxylation via $Eu^{3+}$. Moreover, we can use a dual crosslinking system of $Eu^{+3}$ and $Ca^{2+}$. With this strategy, we can reach remarkable pharmaceuticals and heavy metals adsorption, as discussed above.

## Claims

1. Composition comprising pectin of low degree of esterification cross-linked with a cross linking agent comprising Eu(III) wherein the composition is in the form of a film.

2. Composition, according to claim 1, wherein the cross-linking agent also comprises Ca(II).

3. Composition, according to claim 1, wherein the cross-linking agent consists of Eu (III) or of a combination of Eu(III) and Ca(II).

4. Composition, according to any of the preceding claims, wherein the pectin of a low degree of esterification comprises less than 20% of methoxylated galacturonic acid residues.

5. Composition, according to any of the preceding claims, which consists essentially of pectin of a low degree of esterification and the cross-linking agent.

6. Process to prepare a composition as described in any of claims 1 to 5 that comprises the next steps:

    a) obtaining a pectin film by a casting method comprising:

        - preparing a water solution of pectin of low degree of esterification
        - pouring the solution of pectin of low degree of esterification in a container and drying to form a film;

    b) obtaining a cross-linked pectin film by a method comprising:

        - immersing the dried film prepared in step a) in a Eu(III) aqueous solution to obtain a film of pectin cross-linked with Eu(III),
        - washing the film of pectin cross-linked with Eu(III) with deionized water and drying said film.

7. Process according to claim 6, wherein the preparation of the water solution of pectin is carried out at a temperature between 40 and 90 ºC under stirring until complete dissolution.

8. Process, according to claim 6 or 7, wherein the amount of pectin in the water solution is between 1 to 8 w/v %.

**9.** Process, according to any of claims 6 to 8, wherein the film prepared in step a) is immersed in a Eu(III) aqueous solution having a concentration of Eu(III) between 100 and 1000 ppm.

**10.** Process, according to any of claims 6 to 9, wherein the process comprises a step b') of obtention of a pectin film cross-linked with Ca(II), between steps a) and b), wherein step b') comprises:

- immersion of the dried film prepared in the previous step a) in a Ca(II) aqueous solution to obtain a film of pectin cross-linked with Ca(II),
- washing the film of pectin cross-linked with Ca(II) obtained in the previous step with deionized water and drying said film.

**11.** Use of the composition described in any of previous claims 1 to 5 to remove chemicals, pharmaceuticals and/or heavy metals from water.

**12.** Use, according to claim 11, wherein the composition comprises or consists of pectin of low degree of esterification cross-linked with a cross-linking agent comprising or consisting of Eu (III) to remove pharmaceuticals from polluted water.

**13.** Use, according to claim 11, wherein the composition comprises or consists of pectin of low degree of esterification cross-linked with a cross-linking agent comprising or consisting of a combination of Eu(III) and Ca(II) to remove pharmaceuticals and/or heavy metals from polluted water.

**14.** Use, according to claim 11 or 12, wherein the pharmaceuticals are selected from Trimethoprim (TMP), Tetracycline (TC) and Chlorpheniramine maleate (CPH).

**15.** Use, according to claim 11 or 13, wherein the heavy metal is selected form divalent or trivalent heavy metals.

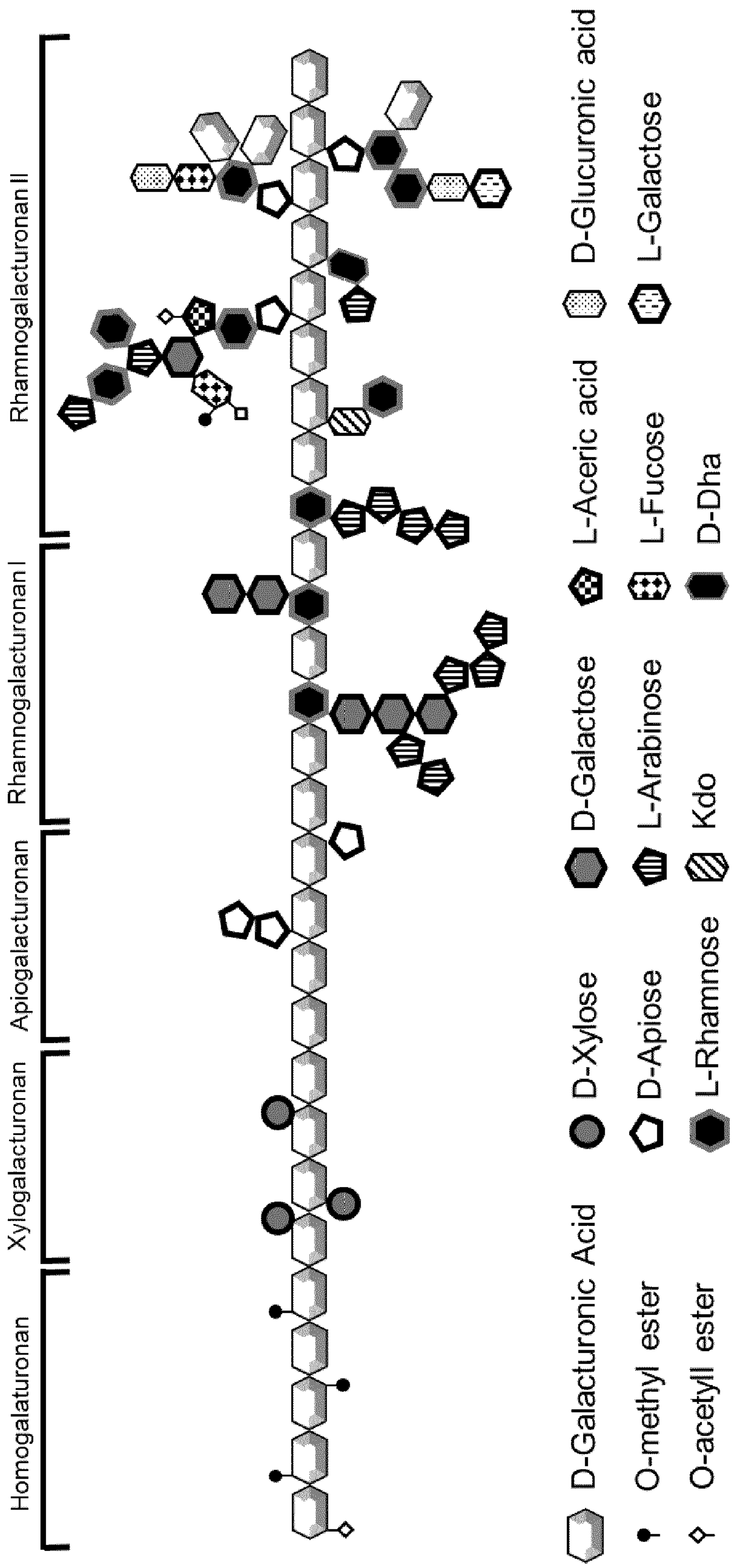
Homogalaturonan
Xylogalacturonan
Apiogalacturonan
Rhamnogalacturonan I
Rhamnogalacturonan II
D-Galacturonic Acid
O-methyl ester
O-acetyll ester
D-Xylose
D-Apiose
L-Rhamnose
D-Galactose
L-Arabinose
Kdo
L-Aceric acid
L-Fucose
D-Dha
D-Glucuronic acid
L-Galactose

Fig. 1

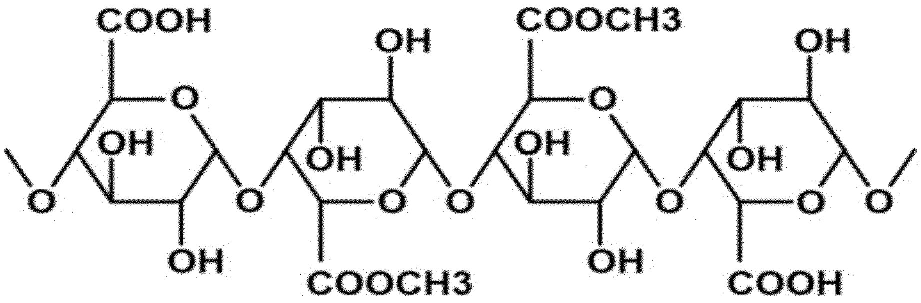

Fig. 2

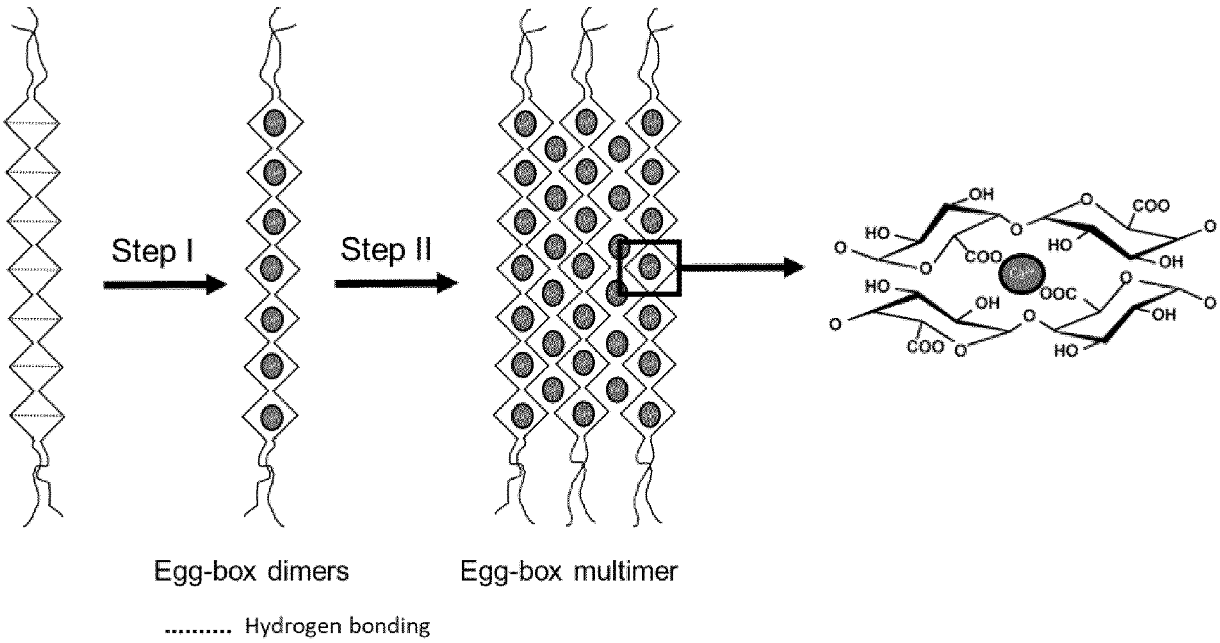
Step I
Step II
Egg-box dimers
Egg-box multimer
.......... Hydrogen bonding

Fig. 3

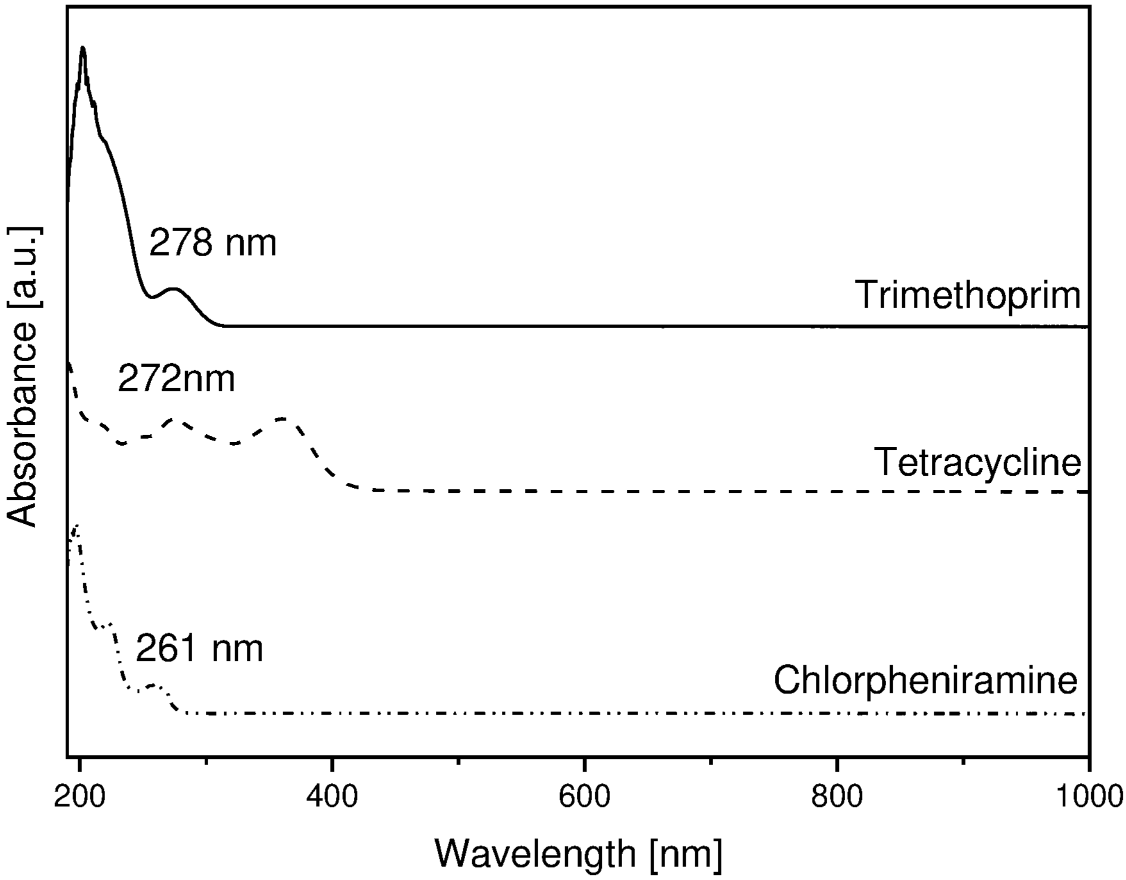
Absorbance [a.u.]
278 nm
Trimethoprim
272nm
Tetracycline
261 nm
Chlorpheniramine
200
400
600
800
1000
Wavelength [nm]

Fig. 4

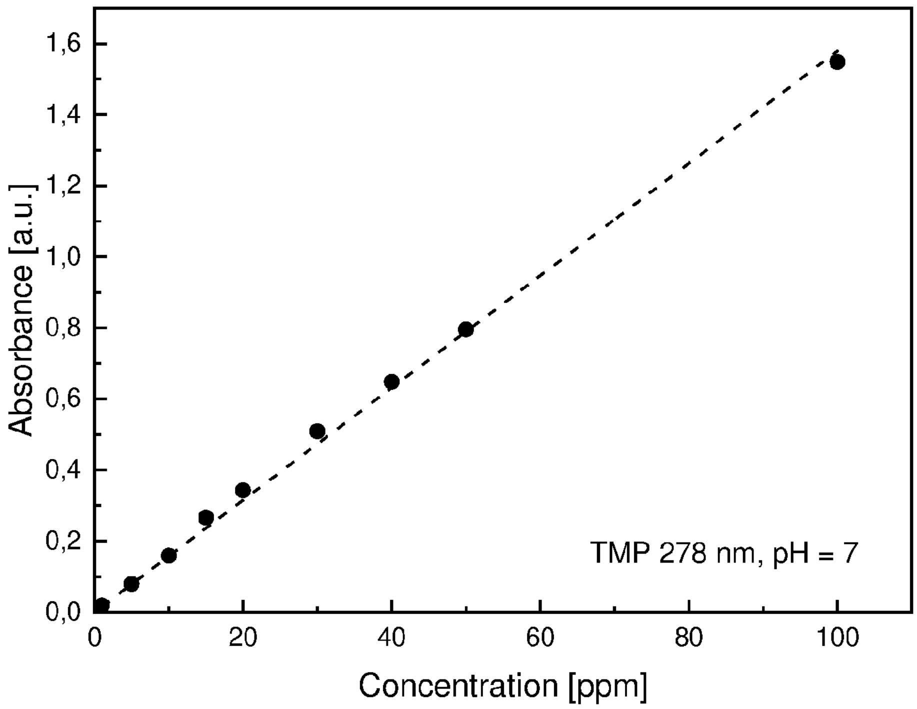

Absorbance [a.u.]
Concentration [ppm]
TMP 278 nm, pH = 7


Fig. 5

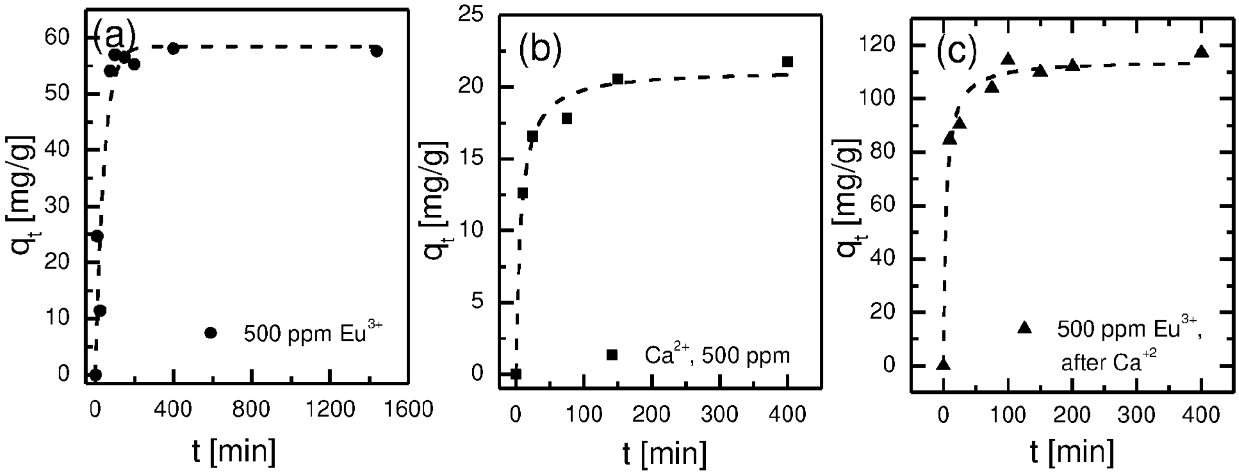

(a)
(b)
(c)
q_t [mg/g]
t [min]
500 ppm Eu3+
Ca2+, 500 ppm
500 ppm Eu3+,
after Ca+2


Fig. 6

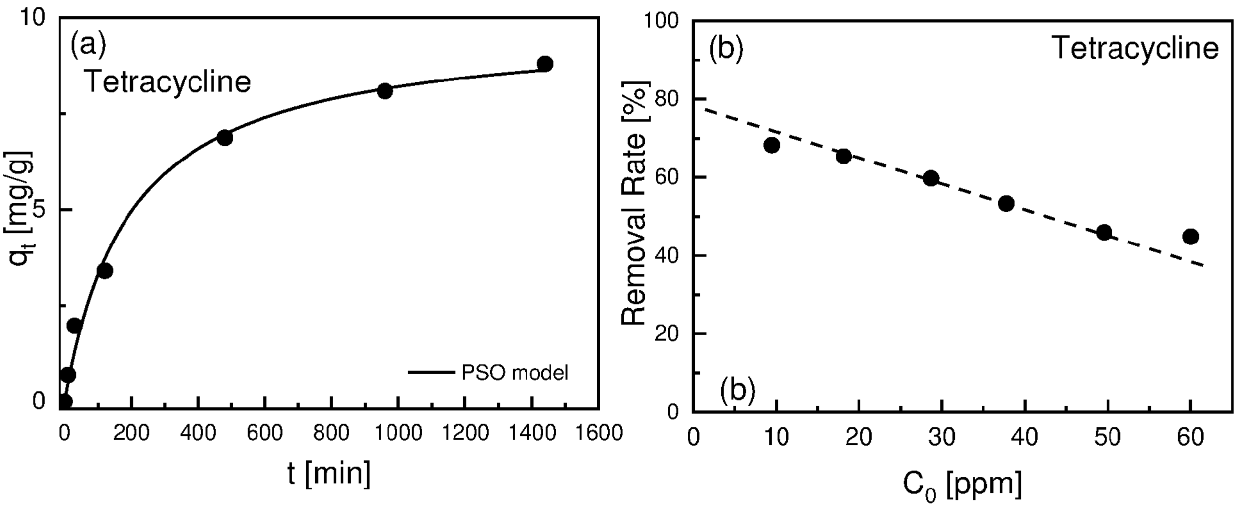
(a)
Tetracycline
PSO model
$q_t$ [mg/g]
t [min]
(b)
Tetracycline
Removal Rate [%]
$C_0$ [ppm]

**Fig. 7**

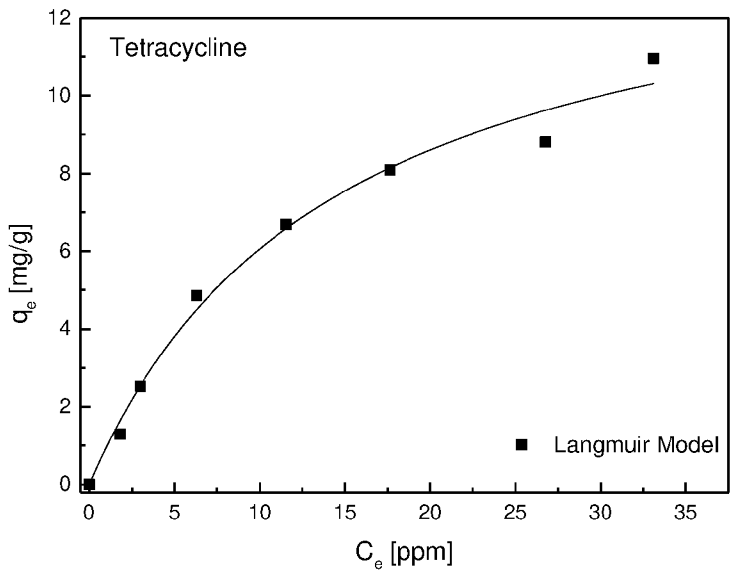
Tetracycline
Langmuir Model
$q_e$ [mg/g]
$C_e$ [ppm]

**Fig. 8**

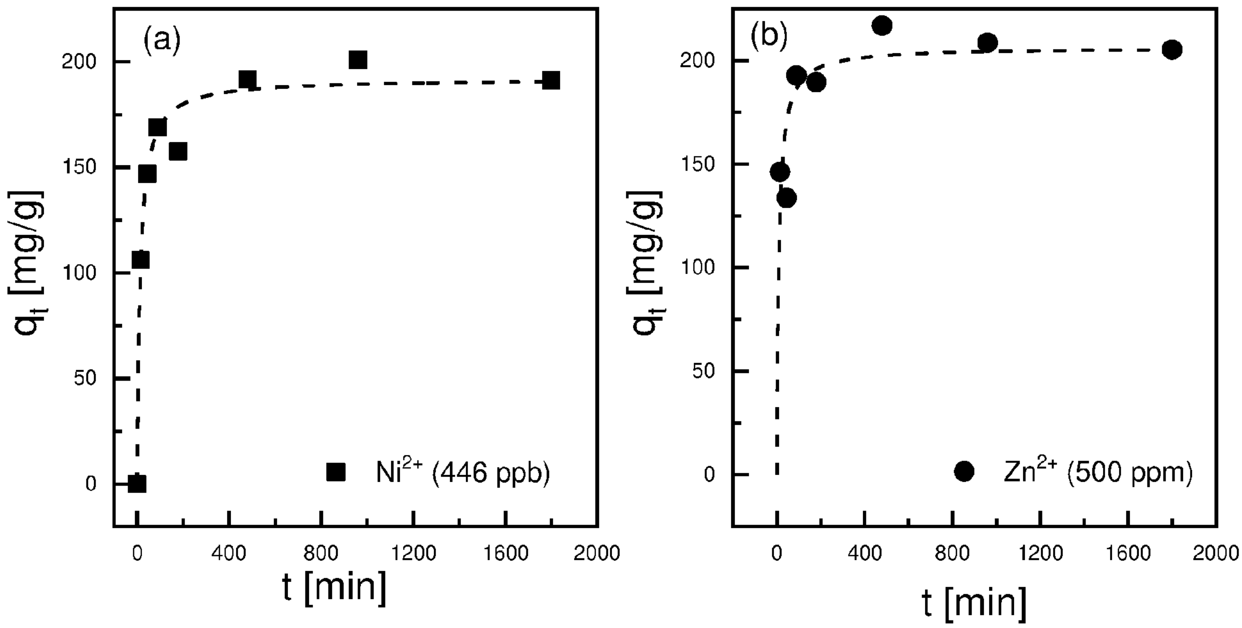
(a)
Ni2+ (446 ppb)
qt [mg/g]
t [min]
(b)
Zn2+ (500 ppm)
qt [mg/g]
t [min]

Fig. 9

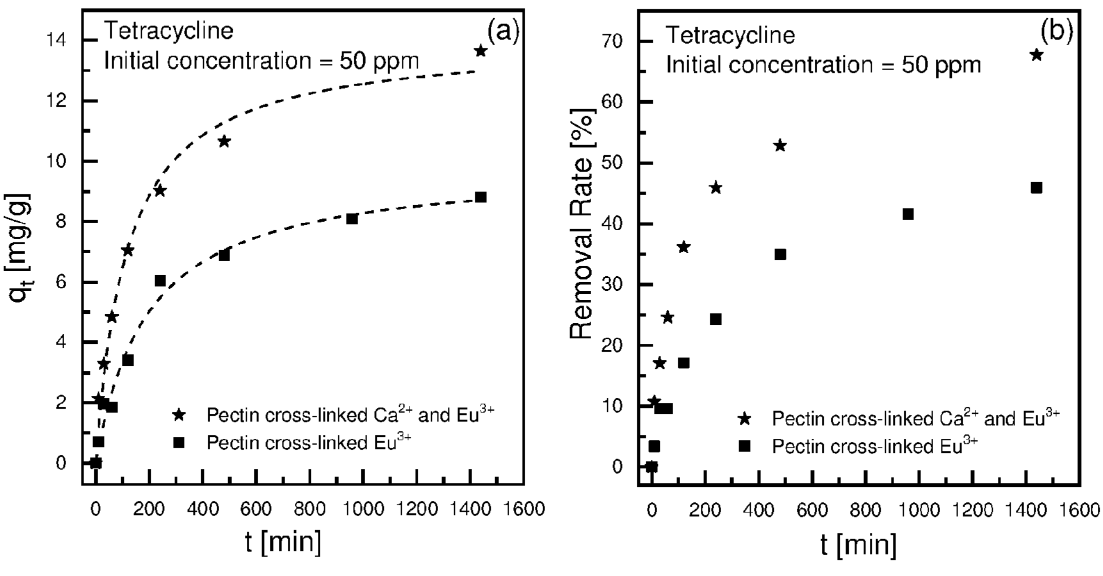
Tetracycline
Initial concentration = 50 ppm
(a)
Pectin cross-linked Ca2+ and Eu3+
Pectin cross-linked Eu3+
qt [mg/g]
t [min]
Tetracycline
Initial concentration = 50 ppm
(b)
Pectin cross-linked Ca2+ and Eu3+
Pectin cross-linked Eu3+
Removal Rate [%]
t [min]

Fig. 10

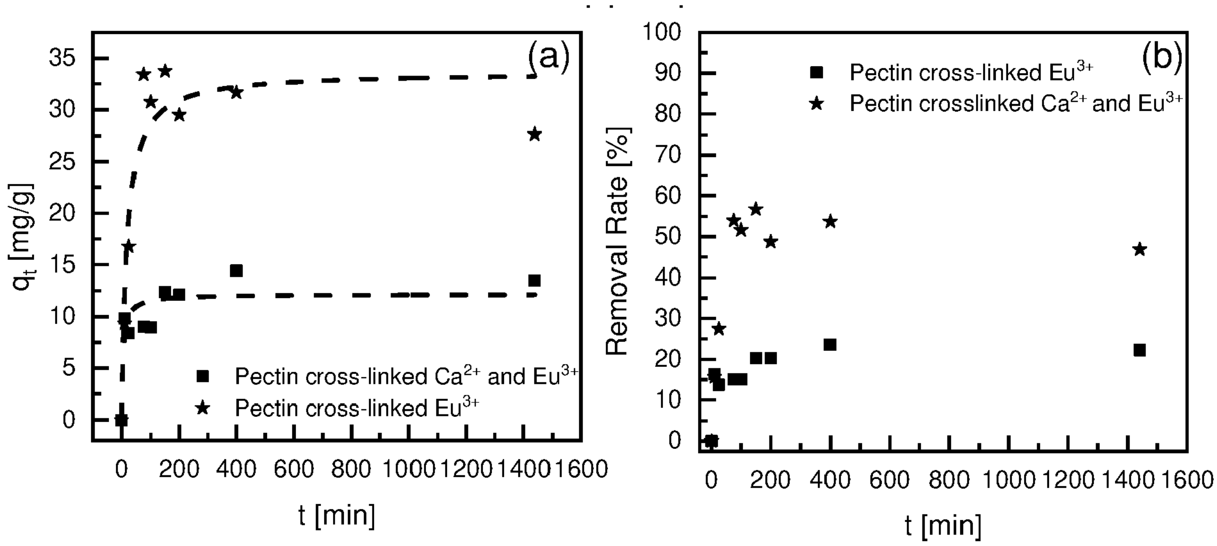
(a)
q_t [mg/g]
t [min]
Pectin cross-linked Ca2+ and Eu3+
Pectin cross-linked Eu3+
(b)
Removal Rate [%]
t [min]
Pectin cross-linked Eu3+
Pectin crosslinked Ca2+ and Eu3+

**Fig. 11**

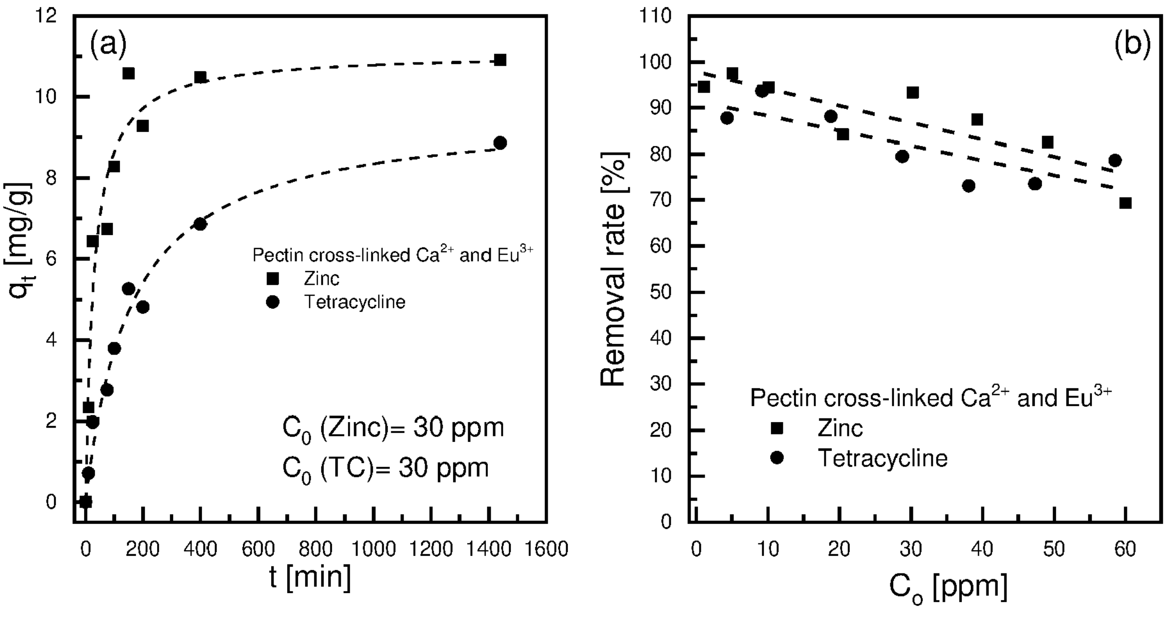
(a)
q_t [mg/g]
t [min]
Pectin cross-linked Ca2+ and Eu3+
Zinc
Tetracycline
C0 (Zinc)= 30 ppm
C0 (TC)= 30 ppm
(b)
Removal rate [%]
Co [ppm]
Pectin cross-linked Ca2+ and Eu3+
Zinc
Tetracycline

**Fig. 12**

Europäisches Patentamt
European Patent Office
Office européen des brevets

# EUROPEAN SEARCH REPORT

Application Number
EP 22 38 3090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br><br><br><br><br><br><br><br><br><br><br><br><br><br>A | LI FEN ET AL: "Preparation and characterization of Ca(II) cross-linking modified pectin microspheres for Pb(II) adsorption",<br>WATER SCIENCE & TECHNOLOGY, [Online]<br>vol. 79, no. 8, 15 April 2019 (2019-04-15), pages 1484-1493, XP093019013,<br>ISSN: 0273-1223, DOI: 10.2166/wst.2019.151<br>Retrieved from the Internet:<br>URL:https://watermark.silverchair.com/wst079081484.pdf?token=AQECAHi208BE49Ooan9kkhW_Ercy7Dm3ZL_9Cf3qfKAc485ysgAAA4wwggOIBgkqhkiG9w0BBwagggN5MIIDdQIBADCCA24GCSqGSIb3DQEHATAeBglghkgBZQMEAS4wEQQMpHVHr4Frkz_hpYskAgEQgIIDP9mUP_UTAhXvI5UqfKXw9skUeTFM0fU7Y0okPSIY42Q07jxmoulSGLrfX69YfQiLT2RUrbZoX1YwxXOdFlV4pha><br>[retrieved on 2023-01-30]<br>* page 1484, paragraph 1 - page 1492, paragraph 1 *<br>----- | 1-5, 11-15<br><br><br><br><br><br><br><br><br><br><br><br><br><br><br><br><br><br>6-10 | INV.<br>C02F1/28<br><br>ADD.<br>C02F101/20<br>C02F101/22<br>C02F101/34<br>C02F101/36<br>C02F101/38<br>C02F101/30 |
| X<br><br>A | CN 109 174 031 A (UNIV XI AN JIAOTONG)<br>11 January 2019 (2019-01-11)<br>* paragraph [0002] - paragraph [0105] *<br>----- | 1-5, 11-15<br>6-10 | **TECHNICAL FIELDS SEARCHED (IPC)**<br><br>C02F |
| A | WANG RISI ET AL: "Pectin-based adsorbents for heavy metal ions: A review",<br>TRENDS IN FOOD SCIENCE & TECHNOLOGY, ELSEVIER SCIENCE PUBLISHERS, GB,<br>vol. 91, 27 July 2019 (2019-07-27), pages 319-329, XP085782889,<br>ISSN: 0924-2244, DOI: 10.1016/J.TIFS.2019.07.033<br>[retrieved on 2019-07-27]<br>* the whole document *<br>-----<br>-/-- | 1-15 | |

The present search report has been drawn up for all claims

1

| Place of search | Date of completion of the search | Examiner |
|---|---|---|
| The Hague | 30 January 2023 | Zsigmond, Zoltán |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 38 3090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | THAKUR SOURBH ET AL: "Progress in pectin based hydrogels for water purification: Trends and challenges", JOURNAL OF ENVIRONMENTAL MANAGEMENT, vol. 238, 7 March 2019 (2019-03-07), pages 210-223, XP085639106, ISSN: 0301-4797, DOI: 10.1016/J.JENVMAN.2019.03.002 * the whole document * ----- | 1-15 | |

TECHNICAL FIELDS SEARCHED (IPC)

The present search report has been drawn up for all claims

1

| Place of search | Date of completion of the search | Examiner |
|---|---|---|
| The Hague | 30 January 2023 | Zsigmond, Zoltán |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 38 3090

This annex lists the patent family members relating to the patent documents cited in the above-mentioned European search report. The members are as contained in the European Patent Office EDP file on
The European Patent Office is in no way liable for these particulars which are merely given for the purpose of information.

30-01-2023

| Patent document cited in search report | Publication date | Patent family member(s) | Publication date |
|---|---|---|---|
| CN 109174031 A | 11-01-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **MCGRANE, S. J.** *Hydrological Sciences Journal,* 2016, vol. 61 (13), 2295-2311
- **CAMPANHA, M. B.** *Environmental Science and Pollution Research,* 2015, vol. 22 (10), 7936-7947
- **FARRÉ, M.** *Journal of Chromatography A,* 2012, vol. 1259, 86-99
- **GAWKOWSKA ; CYBULSKA ; ZDUNEK.** *Pol.,* 2018, vol. 10 (7
- **ZDUNEK ; PIECZYWEK ; CYBULSKA.** *Comp. Rev. Food Scien. Food Saf.,* 2021, vol. 20 (1), 1101-1117
- **MUNARIN, F.** *International Journal of Biological Macromolecules,* 2012, vol. 51 (4), 681-689
- **MCKENNA, B. A.** *Carbohydrate Research,* 2010, vol. 345 (9), 1174-1179
- **CAO, L. et al.** *Carbohydrate Polymers,* April 2020, vol. 242, 116389
- **GRANT, G. T.** *FEBS Letters,* 1973, vol. 32 (1), 195-198
- **THAKUR, B. R. et al.** *Critical Reviews in Food Science and Nutrition,* 1997, vol. 37 (1), 47-73
- **MOSLEMI, M.** *Carbohydrate Polymers,* 2021, vol. 254, 117324
- **REICHEMBACH, L. H. et al.** *Food Hydrocolloids,* 2021, vol. 118, 106824
- **OLIVA-MORENO, E. et al.** *Materials Letters,* 2021, vol. 290, 129488
- **ESPITIA, P. J. P. et al.** *Food Hydrocolloids,* 2014, vol. 35, 287-296
- **HUANG, S. et al.** *Food Chemistry,* 2021, vol. 361, 129832
- **MAKAREMI, M. et al.** *ACS Applied Materials & Interfaces,* 2017, vol. 9 (20), 17476-17488
- **THAKUR, S. et al.** *Journal of Environmental Management,* 2019, vol. 238, 210-223
- **WANG, R. et al.** *Trends Food Sci. Technol.,* 2019, vol. 91, 319-329
- **RAMPUN, E. L. A. et al.** *Membrane Technology,* 2019, vol. 2019 (12), 5-9
- **ZEGADA FRANCO, V. Y.** *Investigación & Desarrollo,* 2015, vol. 1, 65-76
- **GRANT, G. T. et al.** *FEBS Letters,* 1973, vol. 32 (1), 195-198
- **J. WANG ; X. GUO.** *Journal of Hazardous Materials,* 2020, vol. 390, 122156
- **WANG, R.-S. et al.** *Polymers,* 2021, vol. 13 (15), 2453